# NEW EUROPEAN PATENT SPECIFICATION

(11) **EP 0 292 067 B2**
(45) Date of publication and mention of the opposition decision: **09.03.1994**
(45) Mention of the grant of the patent: 24.04.1991
(21) Application number: 88200985.5
(22) Date of filing: 17.05.1988
(51) Int. Cl.: B26F 3/00, B26D 7/18, C03B 33/02

(54) **A device for separating a stack of flat elements**
Einrichtung zum Zerteilen eines Stapels von flachen Gegenständen
Dispositif pour séparer en deux une pile d'articles plats

(30) Priority: 18.05.1987 NL 8701191
(43) Date of publication of application: 23.11.1988
(73) Proprietor: E.P.V. Europäische Patentverwertungs A.G., FL-9490 Vaduz (LI)
(72) Inventor: Vanhoutte, Jan Eric Rene, B-3810 Brugge 3 (BE); Izaks, Herman Berend, NL-7151 ZW Eibergen (NL)
(74) Representative: Morel, Christiaan F., Ir.Dr.

(56) References cited:
- CH-B- 621 287
- DE-A- 2 353 997
- DE-C- 114 293
- FR-A- 1 570 504
- FR-A- 2 211 872
- FR-A- 2 275 308
- FR-A- 2 302 974
- FR-A- 2 514 296
- JP-A-51 055 311

## Description

The invention relates to a device for separating into two parts, a stack of elements, of which each element has at least one weakening or break line extending along at least one parallel separating plane, by exerting a force having a component in a plane perpendicular to the break line, comprising:
- a first clamping member for clamping one part of the stack of elements in a clamping direction extending parallel to said separating plane; and
- a second clamping member for clamping the other part of the stack of the elements in the clamping direction of the separating plane;

each of the clamping members comprises a positioning member movable in vertical direction and a pressure member for the counter pressure and at least one of the clamping members can be tilted about an axis of tilt, extending at right angles to said clamping direction and parallel to said separating plane.

Such a device is known from the CH-A-621 287, in which in one of the shown devices one of the clamping members can tilt over a small angle around an axis of tilt. However this axis lays substantially in the plane of symmetry through the tilting clamping member, which makes that when the force is applied this force applied will be over the whole separation plane the same. So the force applied on one of the cardboards will be the total force divided through the number of cardboards which are in the stack. For dividing the stack of cardboards into two parts a relatively large force has to be applied. The FR-A-2302974 also describes a device for dividing a stack of cardboards of which one of the preferred embodiments shows a similar possibility to separate the cardboards into two parts.

The aim of the invention is to provide a device with which it is possible to separate a stack of elements such as cardboard plano into two or more parts along a weakening line with a force which is remarkable smaller than the force which ought to be applied with the known devices to separate the same number of cardboards.

Another aim of the invention is to provide a device according which it is possible to have the process of separating the elements into two parts totally automatic.

This is achieved according to the invention with a device according to the characterising part of claim 1.

In a preferred embodiment of the device according to the invention the pressure member comprises a counter pressure plate.

The current invention will be elucidated hereinafter with reference to annexed drawings, in which:
Figure 1 shows a schematic, perspective view of a first embodiment of the current invention and
figure 2 shows a schematic, perspective view of a second embodiment of the current invention.

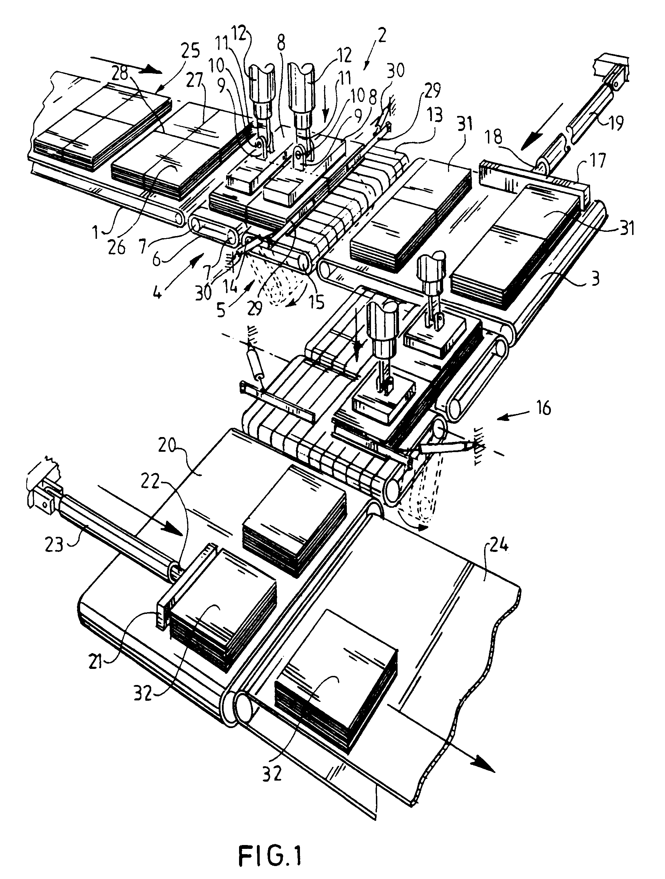

The device illustrated in figure 1 comprises a feed conveyor belt 1, a separating device 2 and a discharge conveyor belt 3. Separating device 2 is formed by a first clamping member 4 and a second clamping member 5.

The first clamping member 4 comprises a short conveyor belt 6 which is passed round two belt drums 7. Arranged beneath the upper half of conveyor belt 6 is a pressure plate (not shown in the drawing) for absorbing the clamping forces. Arranged above the conveyor belt is a positioning member 8 which is attached by means of a bracket 9 and a shaft 10 to a rod 11. Rod 11 can be moved in vertical direction by means of a hydraulic cylinder 12.

The second clamping member 5 is likewise formed by a conveyor belt 13 which is passed round a first belt drum 14 and a second belt drum 15. The shaft of belt drum 14 is filled rigidly, so that belt drum 14 can only rotate, while the shaft of belt drum 15 can move just as conveyor belt 13 downward in a circular arc to a lower position shown with dashed lines.

Likewise arranged beneath the upper half of conveyor belt 13 is a pressure plate (not shown in the drawing) which can also take part in the downward directed tilting movement of belt 13 and the movable belt drum 15.

Also arranged above the belt 13 is a positioning member 8 which is attached by means of a bracket 9 and a shaft 10 to a rod 11 so that the positioning member can tilt relative to rod 11, while rod 11 can also be moved in vertical direction by means of a hydraulic cylinder 12. It is further possible to design the whole pressing device 8, 9, 10, 11, 12 such that it is tiltable on the same axis as the assembly of the two drums 14, 15.

Arranged above belt 13 are two movable stops 29 which can be moved upward by means of hydraulic cylinders 30.

Arranged adjoining conveyor belt 3 is a second separating device 16, the construction of which corresponds with the previously described separating device 2. The separating plane of this second separating device 16 extends however at right angles to the direction of the separating plane of the first separating device. By connecting these two separating devices 2,16 in series it is possible to separate the elements for separating in two directions extending at right angles to each other.

In order to transport the elements for separation from conveyor belt 3 to the second separating device 16 a slider member 17 is fitted. This slider member 17 is connected by means of a rod 18 to a hydraulic cylinder 19 so that the slider member can move in the direction extending at right angles to the direction of movement of conveyor belt 3. Instead of a conveyor belt a system of ropes or chains can also be employed.

Arranged following the second separating device 16 is a second discharge conveyor belt 20, above which is arranged another slider member 21 which is connected by means of a rod 22 to a hydraulic cylinder 23 so that slider 21 can move in the direction extending at right angles to the conveying direction of belt 20. Fitted adjoining this belt 20 is a discharge conveyor belt 24.

The operation of the combined separating device will be discussed in the following. Supplied on conveyor belt 1 are sheets of cardboard 25, each formed by four planos 26. The latter are separated from one another by two dividing lines 27, 28 at right angles to each other. The movement of the conveyor belt is controlled such that the stacks of cardboard 25 are fed to the separating device 2 one by one. The conveyor belts 6 and 13 are also driven during this process. The movement of the stack of cardboard sheets is continued until it comes up against movable stops 29.

The positioning members 9 are then moved downward by means of hydraulic cylinders 12 until they clamp the relevant planos against conveyor belts 6 and 13 and the pressure plates placed beneath them. The same result can be achieved by pressing up the planos by means of a pressing member between the belts 6, 13 against a fixed but nevertheless adjustable positioning member.

The stop members 29 are then moved away by means of hydraulic cylinders 30 and the second clamping member performs a tilting movement on the axis of tilt. During this tilting movement the conveyor belt 13, the pressure plate, the conveyor belt 13 and the drum 15 rotate downward on the shaft of drum 14. Because it can in any case rotate on the shaft 10 and because the pressure from above continues to be supplied, the positioning member 8 will take part in this turning movement, so that the planos damped between the second positioning member 8 and conveyor belt 13 will also take part in this movement and the two stacks of planos are separated along the break line. When this tilting movement is completed it is again performed in reverse direction.

The conveyor belts 6 and 13 are thereby controlled such that the stacks of pair-wise attached planos arrive on conveyor belt 3 one lot at a time. These stacks 31 of pair-wise attached planos are there transported one lot at a time by slider member 19 to the second separating device 6 and subjected once more to a separating operation. Resulting from the handling in this second separating device are separate stacks of planos 32 which move onto conveyor belt 20, there to be shifted one by one by slider 21 to the discharge conveyor belt 24. The cardboard sheets are thus separated into thick stacks in two directions without the intervention of human muscle power.

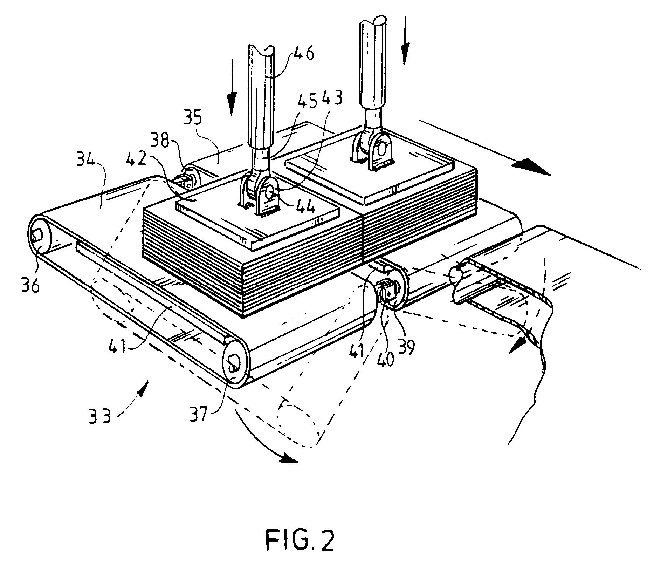

In the embodiment shown in figure 2 the separating device 33 consists of two conveyor belts 34, 35 divided in lengthwise direction. Conveyor belt 34 is passed round two belt drums 36, 37, while conveyor belt 35 is passed round two belt drums 38, 39. Belt drums 36 and 38 are joined to each other by means of a flexible coupling 40, just as belt drums 37 and 39. Further arranged under each of the belts 34, 35 is a pressure plate 41. Disposed once more above the upper half of conveyor belt 34, 35 is a positioning member 42 which is connected by means of brackets 43, a shaft 44 and a rod 45 to a hydraulic cylinder 46.

The operation of this second embodiment of the current invention is identical to that of the embodiment shown in figure 1, with the exception that the conveyor belts can be tilted in lengthwise direction. This has the advantage that this device can be placed directly following the first separating device from figure 1 so that for separation in the second direction no change in the conveying direction is necessary. Both separating devices 2, 16 can also be placed following each other, whereby however a rotary table has to be interposed. Further shown in figure 2 is that both conveyor belts can be tilted downward. It is also conceivable that only one of the conveyor belts is downward tiltable.

Using this device it is also possible to separate the stacks of planos from each other without human intervention.

The above described embodiments relate to the separation of stacks of planos. The device according to the current invention can also be employed for the separating of other separable objects.

Use is made with the above described embodiments of hydraulic cylinders 12 for effecting movement of the positioning members. It is also possible to make use of pneumatic cylinders, electro-motors or hand wheels.

It is possible to employ other transporting means instead of the slider member used in the above embodiments.

It is in addition possible according to the present invention to separate elements which are each partially separable in multiple parallel planes, for instance when two elements are joined to each other by a dividing line in crenellated form and the joins to be separated are only present on the end faces.

Such elements may also be separated successively stepwise, that is, plane by plane.

When the device intended for two separating planes at right angles to each other is used only for one separating plane, a separating device can be switched off and used as a conveyor device.

## Claims

1. A device for separating into two parts (26), a stack of elements (25), of which each element has at least one weakening or break line (27, 28) extending along at least one parallel separating plane, by exerting a force having a component in a plane perpendicular to the break line, comprising:
- a first clamping member (4; 34, 41, 42) for clamping one part of the stack of elements in a clamping direction extending parallel to said separating plane; and
- a second clamping member (5; 35, 41, 42) for clamping the other part of the stack of the elements in the clamping direction of the separating plane; each of the clamping members (4, 5; 41, 42) comprises a positioning member (8; 42) movable in vertical direction and a pressure member (6, 13; 34, 35, 41) for the counter pressure and at least one of the clamping members (8, 13; 34, 35, 41, 42) can be tilted about an axis of tilt, extending at right angles to said clamping direction and parallel to said separating plane,
characterized
in that said pressure member comprises an endless conveyor,
in the case that the separating plane is at right angles to the conveying direction, in that the axis of tilt is the axis of the one (14) of the drums (14,15) of the conveyor being closest to the separating plane,
and alternatively, in the case that the separating plane is parallel to the conveying direction, in that the axis of tilt is the axis of the couplings (40) joining the drums (36-39) of the endless conveyors (34,35) of each of the clamping members.

2. A device according to claim 1, characterized in that the pressure member comprises also a counter pressure plate (41).

3. A device according to claim 1 or 2, characterized in that both clamping members (34, 35, 41, 42) can tilt along an axis (40) of tilt.

## Patentansprüche

1. Vorrichtung zum Zerteilen eines Stapels von Elementen (25) in zwei Teile (26), wobei jedes Element wenigstens eine Schwächungs- oder Bruchlinie (27,28) aufweist, die sich entlang wenigstens einer parallelen Teilungsebene erstrecken, durch Ausübung einer Kraft, welche eine in einer Ebene senkrecht zur Bruchlinie verlaufende Komponente aufweist, mit den folgenden Merkmalen:
- einem ersten Klemmkörper (4; 34, 41, 42) zum Festklemmen des einen Teils des Stapels von Elementen in einer Klemmrichtung, die sich parallel zu der Teilungsebene erstreckt; und
- einem zweiten Klemmkörper (5; 35, 41, 42) zum Festklemmen des anderen Teils des Stapels von Elementen in der Klemmrichtung der Teilungsebene;
wobei jeder der Klemmkörper(4, 5; 41, 42) ein in Vertikalrichtung bewegliches Positionierungsglied (8, 42) und einen Druckkörper (6, 13; 34, 35, 41) zur Erzeugung eine Gegendruckes aufweist und wenigstens einer der Klemmkörper (8, 13; 34, 35, 41, 42) um eine Kippachse kippbar ist, die sich rechtwinklig zur Klemmrichtung und parallel zur Teilungsebene erstreckt,
dadurch gekennzeichnet,
daß der Druckkörper einen endlosen Förderriemen aufweist,
daß die Kippachse mit der Achse derjenigen (14) Trommel (14,15) des Förderriemens zusammenfällt, die der Teilungsebene am nächsten liegt, falls die Teilungsebene rechtwinklig zur Förderrichtung verläuft,
und daß die Kippachse stattdessen die Achse der Kupplung (40) ist, die die Trommeln (36-39) der endlosen Förderriemen (34,35) eines jeden Klemmkörpers verbindet, falls die Teilungsebene parallel zur Förderrichtung verläuft.

2. Vorrichtung nach Anspruch 1, dadurch gekennzeichnet, daß der Druckkörper weiter eine Gegendruckplatte (41) aufweist.

3. Vorrichtung nach den Ansprüchen 1 oder 2, dadurch gekennzeichnet, daß beide Klemmkörper (34, 35, 41, 42) um eine Kippachse (40) kippbar sind.

## Revendications

1. Dispositif pour séparer en deux parties (26), une pile d'éléments (25), dans laquelle chaque élément a au moins une ligne de brisure ou une ligne d'affaiblissement (27, 28) s'étendant le long d'au moins un plan de séparation parallèle, en exerçant une force ayant une composante suivant un plan perpendiculaire à la ligne de brisure, comprenant :
- un premier organe de serrage (4; 34, 41, 42) pour serrer une partie de la pile d'éléments suivant une direction de serrage s'étendant parallèlement audit plan de séparation; et
- un second organe de serrage (5; 35, 41, 42) pour serrer l'autre partie de la pile d'éléments suivant la direction de serrage du plan de séparation; chacun des organes de serrage (4, 5; 41, 42) comporte un organe de positionnement (8; 42) mobile suivant une direction verticale et un organe de pression (6, 13; 34, 35, 41) pour la contre-pression et au moins l'un des organes de serrage (8, 13; 34, 35, 41, 42) peut être incliné autour d'un axe d'inclinaison, s'étendant à angle droit par rapport à ladite direction de serrage et parallèlement audit plan de séparation, caractérisé
en ce que ledit organe de pression comprend un convoyeur sans fin,
dans le cas où le plan de séparation est à angle droit par rapport à la direction de convoyage, en ce que l'axe d'inclinaison est l'axe de l'un (14) des tambours (14, 15) du convoyeur le plus proche du plan de séparation,
et alternativement, dans le cas où le plan de séparation est parallèle à la direction de convoyage, en ce que l'axe d'inclinaison est l'axe des couplages (40) joignant les tambours (36-39) des convoyeurs sans fin (34, 35) de chacun des organes de serrage.

2. Dispositif selon la revendication 1, caractérisé en que l'organe de pression comprend également une plaque de contre-pression (41).

3. Dispositif selon la revendication 1 ou 2, caractérisé en que les deux organes de serrage (34, 35, 41, 42) peuvent être inclinés le long d'un axe (40) d'inclinaison.
